# EUROPEAN PATENT SPECIFICATION

(11) **EP 2 547 739 B1**
(45) Date of publication and mention of the grant of the patent: **26.08.2015**
(21) Application number: 11708872.4
(22) Date of filing: 17.03.2011
(51) Int. Cl.: C09J 5/06, B27G 11/00, B27F 1/16

(54) **CONTACTLESS APPLICATION OF AN ADHESIVE**
KONTAKTLOSE AUFTRAGUNG EINES HAFTSTOFFES
APPLICATION SANS CONTACT D'UN ADHÉSIF

(30) Priority: 17.03.2010 GB 201004458
(43) Date of publication of application: 23.01.2013
(73) Proprietor: Dynea Oy, 00580 Helsinki (FI)
(72) Inventor: MANNSVERK, Geir Ove, N-0583 Oslo (NO); MØRLAND, Einar, N-0659 Oslo (NO); GRØSTAD, Kristin, N-1481 Hagan (NO); BJØRN, Trana, N-0963 Oslo (NO)
(74) Representative: Derks, Wilbert
(86) International application number: PCT/EP2011/054075
(87) International publication number: WO 2011/113906

(56) References cited:
- EP-A1- 0 949 309
- EP-A1- 1 862 277
- DATABASE WPI Week 199927 Thomson Scientific, London, GB; AN 1999-321647 XP002664430, & JP 11 114471 A (FUJI HEAVY IND LTD) 27 April 1999 (1999-04-27)

## Description

### BACKGROUND OF THE INVENTION

### 1. Field of the Invention

The invention relates generally to a method for contactless application of an adhesive to a finger surface of a substrate and more particularly to condensation adhesives for contactless application to a finger surface of a wood panel and subsequently joining the fingerjoints of two wood panels.

### 2. Description of the Related Art

Finger joints are used both within non-structural and structural applications. Finger joints are for example, rectangular or jagged edges of a substrate, such as wood or laminate, that are to be pieced together. Each jagged piece in the edge of a substrate may be considered a finger joint. There may be a whole row and/or rows and columns forming a matrix of joints at the edge of a substrate. In order to piece together and to secure to substrates at these finger joints, adhesive at these joints is required.

There are several methods for joining finger joints together via adhesives. Conventional methods are a roller or matrix method, where glue is deposited and thereby roller is placed over the substrate. This method works for most types of adhesives, but has drawbacks in that it is messier and less efficient. The equipment must be cleaned often because the roller or matrix becomes contaminated by the substrate, particularly when the substrate is wood.

An alternative is a contactless application method. Contactless means that there is no physical contact between the application head and the wood. As this method does not require the applicator to physically touch the surface of the substrate, thereby increasing efficiency and reducing stop time. For example, EP 19845676 describes a contactless method for joining two components, such as wood structures, through the use of applying adhesive to an application unit, monitoring the adhesive bead through an optical sensor, and combining components by contacting them together. The glue lines are delivered to the top of the fingers via nozzles. No subsequent spreading is done before joining the fingerjoints of the substrates to be adhered. The spreading of the adhesive over the surface of the fingers in the fingerjoint is done when the fingerjoints of the substrates are pressed together. In sum, contactless application generally obviates the need for washing and reduces stop time for the equipment, thereby increasing efficiency. Adhesives used in contactless finger joint application are polyurethane and emulsion polymer isocyanate adhesives.

EP 0949309 A1 discloses a cure promoter composition for phenolic resin based or resorcinol resin based adhesive system comprising a carbonate and a method of joining cellulosic fibre containing surfaces by means of a phenolic resin based or resorcinol resin based adhesive system whereby at least one of the surfaces is treated with such a cure promoter prior to the adhesive system being applied.

EP 1862277 A1 discloses a process for adhesive bonding of at least two complementary joining elements to a joining surface by the steps: (a) application of adhesive strands to the first and/or second joining element perpendicular to the fingerjoints, (b) direction of an air stream onto the applied adhesive to blow the adhesive into the finger joints and (c) pressure bonding together of the two elements. In particular the invention relates to contactless finger joint application of adhesives and especially to preventing loss of adhesive by dripping at the end of a joint by blowing the applied resin between the finger joint.

JP 19970280309 describes an adhesive coating apparatus for coating a workpiece with an adhesive coasting, which apparatus comprises a nozzle for blowing cold air for cooling the coated workpiece.

The problem of the method of known contactless fingerjoint application is that the adhesives are expensive, not versatile or easy to use. Therefore, there is a desire for an improved method for contactless fingerjoint application that uses inexpensive adhesives that are easy to use, environmentally friendly and result in good and reliable fingerjoint bonding.

### BRIEF SUMMARY OF THE INVENTION

The present invention addresses these problems by providing a method applying an adhesive to a finger surface of a substrate, comprising:
- providing a contactless application device comprises at least 2 nozzles for ejecting adhesive onto the substrate without contacting the substrate,
- providing a modified adhesive comprising
- a condensation resin selected from the group of urea formaldehyde (UF) resin, melamine formaldehyde resin (MF), modified melamine formaldehyde resin (xMF) and phenol resorcinol formaldehyde resin (PRF) or combinations thereof,
- optionally a hardener,
   wherein the adhesive rheology is modified by at least one of the following measures:
- cooling to a temperature between 5 and 15 °C , preferably 5 to 10°C
- including into the adhesive a viscosity increasing substance
- including a thixotropic substance in an effective amount to prevent sagging of the adhesive on the surface.

At least one of the rheology of the hardener and the rheology of the adhesive are modified by at least one of the following measures: cooling to a temperature between 5 and 15 °C, preferably 5 to 10°C to achieve a viscosity of at least 5000 mPas and preferably less than 20,000 mPas, including into the adhesive a viscosity increasing substance to increase the viscosity to at least 3000 mPas and preferably less than 20,000 mPas, including a thixotropic substance or thixotropy increasing substance in an effective amount to prevent sagging of the adhesive on the surface. The thixotropic increasing substance can be a substance that gives shear thinning properties.

In the method according to the invention, the rheology modification of the condensation resin adhesive can provide glue-line strings on the fingers which are easy to detect with a quality control system thereby achieving guaranteed quality of the adhesive bond. The modified condensation adhesives have excellent adhesive properties, are water based, easy to use and environmentally friendly.

In contactless fingerjoint application, the adhesive is applied onto the tips of the fingers of the finger joints. The typical period between the time the glue is applied to the fingers of the substrate and the time they are joined in a press is 3-15 seconds. During this time the substrates are transported and handled. The inventors found that the most important parameter in achieving reliable and good quality adhesive bonding of substrates in contactless applications is to prevent dripping and sagging of the glue on the fingers during the time interval between applying and joining of the substrates. In order to ensure safe and effective gluing, glue strings should stay on the fingers, and not sag significantly during a period of 60 seconds after application.

It is possible to overcome some of the problems with sagging from the glue line by "pushing," the glue more into the fingers from the nozzles by increasing the pressure in the applicator. However this technology makes it more difficult to control and ensure that the surface of the fingers in the finger joint is completely covered with adhesive.

Through the inventive method, condensation resin adhesives can be used in this very advanced but demanding application; something that was not previously considered as possible and brings several advantages as mentioned. It is surprising that, through the use of only small amounts of rheology modifiers that hardly affect adhesive properties (if at all) and/or temperature rheology modification, condensation adhesives that otherwise have unsuitable characteristics for contactless application can be utilized in such contactless finger joints and can reliably provide a very good coverage of the surface of the fingers and reduce sagging.

The hardener can be mixed into the adhesive or can be applied separately to the surface of the substrate. In this context, separate means that the adhesive and the hardener are not mixed. The adhesive includes the hardener in this application unless the hardener is separately stated. Applying the adhesive in mixed fonn is easier, but sometimes it can be advantageous to apply the adhesive separately in unmixed state to prevent premature curing. The adhesive and hardener can be applied separately and unmixed on the same surface or each separately to the opposing substrate surfaces to be adhered.

According to one embodiment of the invention, the hardener is applied separately to a substrate and wherein also the rheology of the hardener is modified by at least one of the following measures
- cooling to a temperature between 5 and 15 °C, preferably 5 to 10°C to achieve a viscosity of at least 5000 mPas and preferably less than 20,000 mPas,
- including into the adhesive a viscosity increasing substance to increase the viscosity to at least 3000 mPas and preferably less than 20,000 mPas,
- including a thixotropic increasing substance in an effective amount to prevent sagging of the adhesive on the surface.

In the embodiment where the hardener and the resin are applied as a mixture, the hardener to resin dosage is 5 to 50 wt% hardener to 100 wt% resin and preferably 10 to 30 wt% hardener to 100 wt% resin. In the embodiment where the hardener and resin are applied separately, the hardener to resin dosage can be from 10 to 200 wt % hardener to 100 wt% resin, preferably 50 to 150 wt% hardener to 100 wt% resin.

The condensation resin according to the invention may comprise any suitable condensation resin for producing a condensation adhesive selected from the group of urea formaldehyde (UF) resin, melamine formaldehyde resin (MF), modified melamine formaldehyde resin (xMF) and phenol resorcinol formaldehyde resin (PRF) or combinations thereof. The resin preferably hardens at room temperature. One example of xMF resins include melamine modified urea formaldehyde (MUF) resins. The adhesives should have high boiling resistance, making melamine - formaldehyde, modified melamine formaldehyde resins and phenol resorcinol formaldehyde resins particularly suitable. Further, it is desired that the resins harden at room temperature. It is known in the art that these resins are suitable resins for use in condensation adhesives to provide excellent properties in gluing and low formaldehyde emission. For example, PCT/EP2009/060462, relates to an improved two component adhesive composition.

It has been found that the condensation resin, when implemented in the adhesive, works particularly well when the condensation resin is urea formaldehyde resin comprising between 20% and 60% wt%, preferably 30 to 55 wt%, most preferably 35 to 50 wt% urea or when the condensation resin is a melamine formaldehyde resin comprising between 25% and 50%, preferably 30 to 45 wt%, most preferably 35 to 45 wt% melamine or when the condensation resin is liquid melamine modified melamine formaldehyde resin comprising between 3% and 50% wt%, preferably 5 to 40 wt%, most preferably 15 to 30 wt% melamine.

In the embodiment where the resin is a PRF resin, the resorcinol content is between 5% and 50% wt%, preferably 10 to 45 wt%, most preferably 15 to 40 wt% resorcinol (calculated on total resin solids weight). When PRF resin is mixed with the hardener, then the hardener to resin dosage is 10 to 50 wt% hardener to 100wt% resin and preferably 20 - 40 wt%, more preferably 10 to 30 wt% hardener to 100 wt% resin.

The rheologically modified adhesive can be used to adhere miscellaneous wood products, but the advantages of the rheology modified adhesive are most pronounced when used in contactless fingerjoint application, in particular in substrates like laminated wood articles, in particular laminated panels and laminated beams.

The viscosity and/or thixotropy increasing substance (together referred to as rheology modifying substances or rheology modifiers) is preferably selected from the group of a carboxymethyl cellulose, hydroxyethyl cellulose, cellulose fibers, polyvinyl alcohol, polyurethane thickener, polyurea sag control agents (SCA), polyvinyl pyrrolidone thickener, swellable emulsions, xanthan gum, fumed silica and clay. Rheology modifiers include thickeners or rheology additives, both organic or inorganic compounds. Based on this disclosure the skilled person can easily find similar or other known rheology modifiers that when added to at least one of the resin and the hardener, provide the desired rheology modification effects. Preferably, the amount of rheology modifying, substances is from 0.1 to 10 wt %, preferably 0.1 to 5wt%, more preferably 0.1 to 2 wt%, calculated based on the total weight of at least one of the liquid resin and the hardener.

According to various aspects of the present invention, the composition described above can be used in an adhesive. In another embodiment; it is applied to a substrate through cooled nozzles.

In yet a further embodiment, the invention relates to a contactless finger joint applicator for cooling an adhesive to 10-15°C and/or a contactless application device for carrying out the cooling step of cooling an adhesive composition to arrive at a desired viscosity.

In yet another embodiment, the invention comprises an apparatus for providing and/or cooling an adhesive composition comprising a means for cooling an adhesive two 15°C and a viscosity of between 5,000 mPas and 20,000 mPas.

In accordance with another aspect of the present invention, an adhesive composition is used in contactless finger joint application method, said composition comprising a modified adhesive comprising: a condensation resin selected from the group of urea formaldehyde (UF) resin, melamine formaldehyde resin (MF), modified melamine formaldehyde resin (xMF) and phenol resorcinol formaldehyde resin (PRF) or combinations thereof, and optionally a hardener, wherein the composition further comprises at least one of a viscosity increasing substance and a thixotropic increasing substance.

Suitable contactless fingerjoint application devices to use with the present invention are commercially available, and include, for example, the Oest system devices, such as Oest Ecopur models. *See* http://www.oest.de. A typical pressure inside the equipment for contactless application of adhesives is 1,5-3,010⁶Pa(15-30 bar).

### BRIEF DESCRIPTION OF THE DRAWINGS

The features and advantages of the invention will be appreciated upon reference to the following drawings, in which:
FIGs. 1-4 are of contactless application of rheology modified adhesives to fingerjoints; and
FIG. 5 is a graph of thixotropic behaviour of rheology modified adhesives for use in a contactless application.

### DESCRIPTION OF ILLUSTRATIVE EMBODIMENTS

The following is a description of certain embodiments of the invention, given by way of example only and with reference to the drawings.

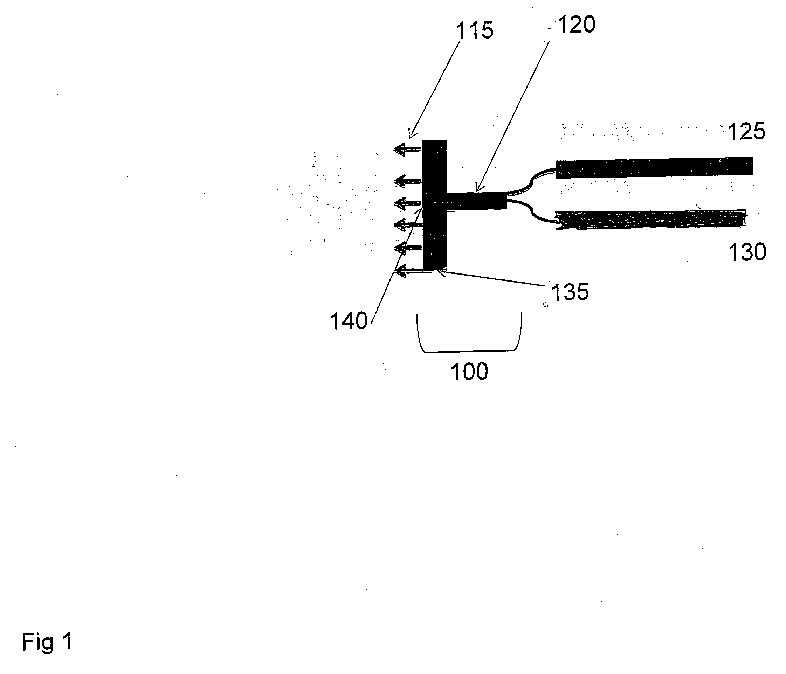

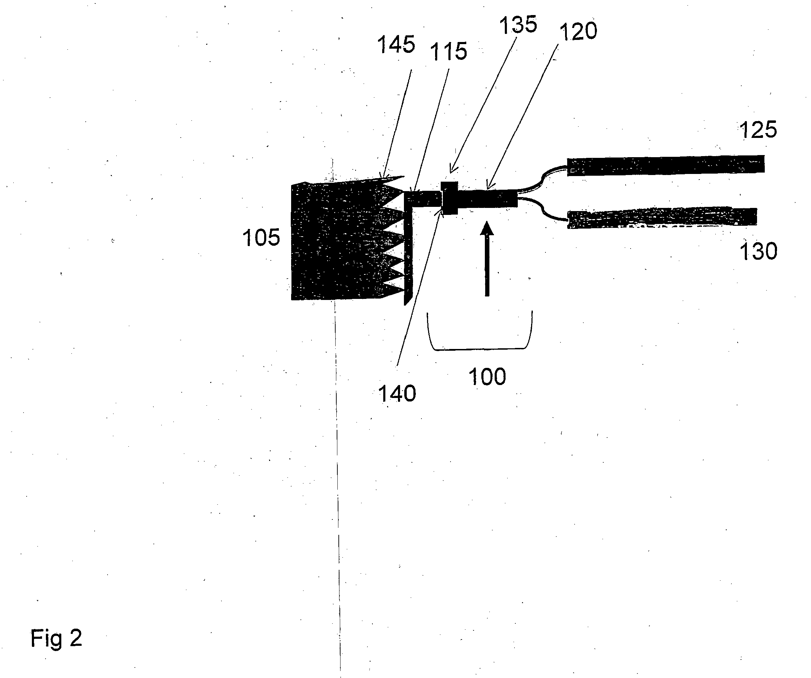

Figures 1 and 2 show a contactless application device 100. The device 100 comprises a control unit 135, a static mixer 120 and an application unit (nozzle) 140 for dispensing the mixed adhesive 115. The resin and the hardener are delivered through separate transport lines 125, 130 to the static mixer 120 and come together to mix the adhesive upon application through the application unit 140. The application unit 140 dispenses the mixed adhesive 115 contactlessly onto the finger 145 of the substrate 105.

The control unit may comprise a variety of functions, including regulating the temperature, pressure and other conditions of the adhesive components, the rheology modifier can also be added in the control unit. Further, the control unit ensures that the correct amount of resin to hardener wt% ratios according to the invention are met. This is performed prior to use of the static mixer 120. The application unit 140 may further contain a pressurizing

The control unit may comprise a variety of functions, including regulating the temperature, pressure and other conditions of the adhesive components, the rheology modifier can also be added in the control unit. Further, the control unit ensures that the correct amount of resin to hardener wt% ratios according to the invention are met. This is performed prior to use of the static mixer 120. The application unit 140 may further contain a pressurizing device and pressure regulator, an optical sensor to monitor the mixed adhesive 115 as it is dispensed, and temperature regulation mechanisms, such as a heat exchanger to adjust remove heat from the resin and/or the hardener right before mixing and application as an adhesive. This temperature regulation can modify the rheology of the adhesive, as further discussed below.

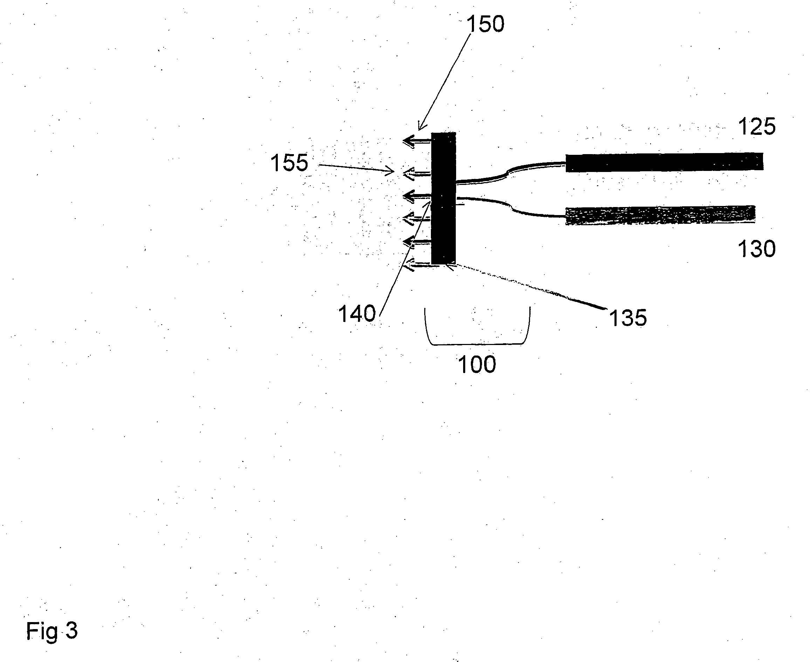

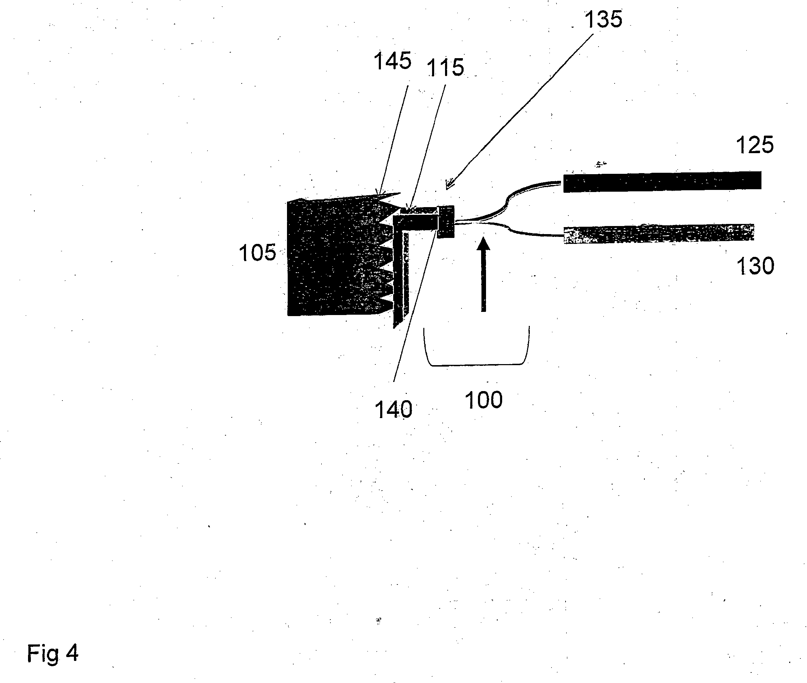

Figures 3 and 4 show contactless application where the adhesive (glue) and hardener are applied separately through nozzles 150 and 155 onto the finger 145 of the substrate 105. In this embodiment, the glue and hardener do not mix until they are dispensed and/or are on the finger 145 of the substrate 105.

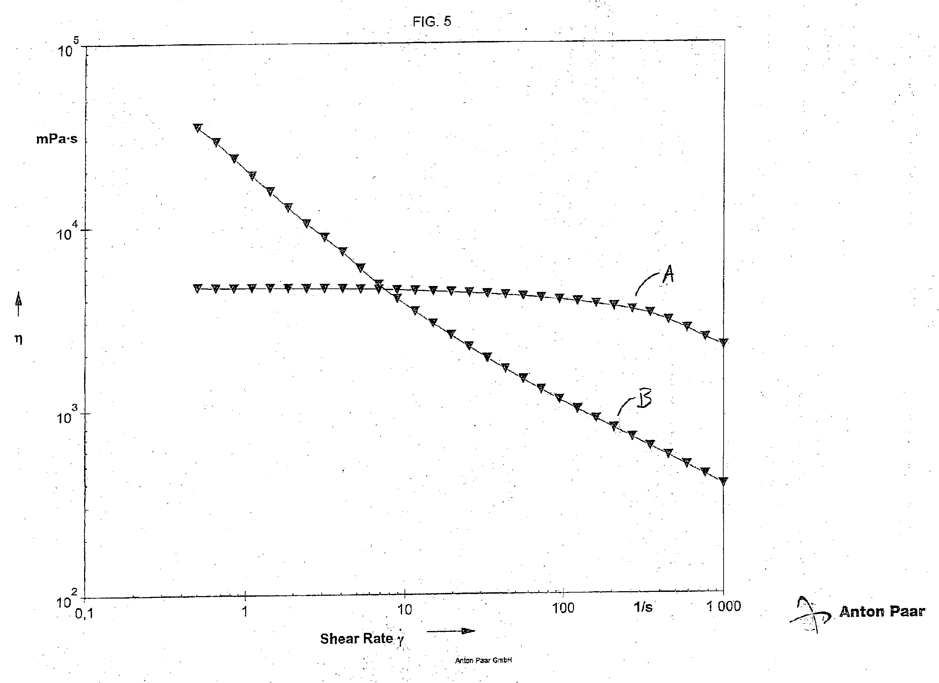

Fig 5 shows the different viscosity behaviour between the inventive formulation A (MUF hardener with rheology additive PP50-SN17135; [d= 1mm]) and a comparative example B (standard formulation Prefere 5021, PP50-SN7410; [d=1mm]). It can be seen that the viscosity (η in mPas) in the comparative example remains almost the same during the change of the shear rate (y.; gamma point), whereas the viscosity of the inventive example is reduced by increasing shear rate, which depicts the effect of shear thinning.

The adhesives 115 according to the present invention comprise rheology properties that prevent and/or minimize sagging when applied to a finger 145 in a contactless application 100, as shown in Figure 1. Adhesives 115 according to the present invention comprise resins, hardeners and rheology modifiers. These adhesives include condensation adhesives.

In this invention resin and hardener can be applied in two ways. Either the glue and hardener are mixed before application (as in Figures 1 and 2), or the glue and hardener is applied separately (as in Figures 3-and 4) and are mixed when the lamellas, the panel of fingers, are pushed together. For separate application the glue and hardener strings can be applied on the same side of the lamella or glue can be applied on one side and the hardener applied on the other side.

The fingers of the lamella, when pressed together, form the joints. The amount of time that it takes for the fingers to join after application of the adhesive is about 1-3 seconds. The pressure applied in pressing the lamellas together is specified in production control systems that are known and readily available to one of skill in the art. For example, 10 N/mm² can be a typical pressure when pressing fingers together in a finger joint, but this depends on the density, temperature, finger profile etc.

The rheology modifiers are added to the resin or the hardener during production of the adhesive components. For separate application the modifiers will work in each component without influence of the other component. For mix in systems the viscosity and thixotropy of each component might influenced on each other. The behaviour of the final system will often be dependent on the pH of the final mix. Some rheology modifiers works at low pH while others works in high pH. For the amino systems the resin and hardener differs a lot in pH. The resin is on the alkaline side and the hardener on the acid side. For mix in systems it is therefore important to choose rheology modifiers that will give an effect at the pH of the final glue mixture.

The rheology of the resin may also be modified by applying a temperature to the adhesive just before application. For example, a heat exchanger, situated in the application unit 140 of the contactless applicator 110 may be applied before application of the hardener or the resin or both to reduce the temperature. Suitable temperature ranges include 5-15 °C, and preferred 5-10°C.

An EPI adhesive mixture has a viscosity of app. 15,000 mPas (measured with Brookfield RVT viscometer at 20 °C with spindle 4 or 6 and 20 rpm) and this mixture will stay on the fingers as shown in Figure 1. It will be understood that if no temperature is specified, then 20 °C (room temperature) is meant. The MUF adhesive has a lower viscosity which may cause sagging and the requirement for application of an even adhesive film in the fingers will not be fulfilled. Sagging is expressed as the distance between the applied adhesive string and the location for the final adhesive string after a certain period where the string has had the possibility to sag.

The following examples illustrate the surprising results when a condensation adhesive according to the present invention is applied in a contactless environment. All viscosities are measured with Brookfield RVT viscometer at the specified temperature with spindle 4 or 6 and 20rpm. Generally a spindle 4 is used for viscosity measurements up to app. 10 000mPas, and at higher viscosities spindle 6 is used.

The results are given as a tendency to sag within 60 seconds.
▪ NO sagging means that the strings will stay at the fingers and the glue film in the fingers in a final finger joint will be good - less than 5 mm movement for the strings
▪ OK sagging means that this may work but still some sagging is observed-app. 5mm movement for the strings
▪ BAD sagging means that the string causes too much sagging and this will not satisfy the requirements for the glue-line film in the finger joints - more than 5 mm movement of the strings

The following adhesives, hardeners and additives were used in Examples 1 - 4 and in Fig 5 below:
▪ Prefere 4546 and Prefere 5021 are MUF adhesive and hardener from Dynea respectively. Information about the products may be found at www.dynea.com.
▪ Prefere 4040 and Prefere 5839 are PRF adhesive and hardener from Dynea respectively.
▪ Swellable emulsion used is Alcogum L-520 which is an Alco Chemical from USA.
▪ Xanthan Gum TNCS from Jungbunzlauer International AG from Switzerland is used as rheology modifier in MUF hardener.
▪ Cellulose fibers from J. Rettemaier & Söhne GmbH from Germany are used as rheology modifier in MUF adhesive.
▪ Fumed silica from Degussa Hüls AG, Germany, is used as rheology modifier in PRF adhesive.

### Example 1. Influence of Temperature

The viscosity and rheology of the MUF adhesive and the hardener is strongly temperature dependent. Table 1 shows typical viscosities for MUF adhesive and hardener at 20 and 10°C and the related results in a contactless application equipment expressed as sagging.

A typical MUF adhesive at room temperature, approximately 20 °C, has a viscosity of 3-6000mPas. Decrease in temperature will improve the performance in contactless application equipment as shown in table 1.

**Table 1. Properties for MUF adhesive and hardener for contactless application finder joint**

| | Viscosity @ 20°C | Viscosity @ 10°C | Sagging @ 20°C | Sagging @ 10°C |
|---|---|---|---|---|
| MUF Adhesive (Prefere 4546) | 5700 | 12500 | Bad | OK |
| MUF hardener (Prefere 5021) | 5600 | 9500 | Bad | OK |

### Example 2. MUF glue mixture for contactless application

A typical MUF glue mixture has a viscosity of app. 3500 mPas at 20°C. Adding a small amount of a swellable emulsion will give a more thixotropic adhesive mixture, reduce the sagging and ensure good perfomnance as strings on the fingers.

**Table 2. Performance of MUF adhesive mixture for contactless application**

| | Viscosity @20°C | Viscosity @ 10°C | Sagging @ 20°C | Sagging @ 10°C |
|---|---|---|---|---|
| MUF Adhesive mix * | 3500 | 7600 | Bad | OK |
| MUF Adhesive mix with swellable emulsion ** | 3600 | 7900 | OK | OK |

| | | | | |
|---|---|---|---|---|
| * (Prefere 4546:5021 100:30 wt%) ** (Prefere 4546 with swellable emulsion: Prefere 5021 100:30 wt%) | | | | |

### Example 3. A combination of rheology additives and temperature for separate application contactless application

Example 1 shows the performance in contactless application for a system without rheology additives. Improvements by adding rheology additives are shown in table 3.

**Table 3. Performance of MUF adhesive and hardener (formic acid) in separate contactless application**

| | Viscosity @20°C | Viscosity @ 10°C | Sagging @ 20°C | Sagging @ 10°C |
|---|---|---|---|---|
| MUF Adhesive with rheology additive | 10000 | 27000 | No | No |
| MUF hardener with rheology additive* | 9900 | 11800 | Ok | No |

| | | | | |
|---|---|---|---|---|
| *(MUF hardener with rheology modifier Xanthan Gum) | | | | |

Figure 5 shows specific rheologic measurement results showing the shear thinning behaviour of the modified condensation resin. The rheometer used in this example was an Anton Paar MCR301 Rheometer (200 1/sec). The flow properties shown in Figure 5 were measured at room temperature (25 °C) by using a parallel plate system with Spindle PP50. As seen in Figure 5, the MUF hardener with rheology modifier from Example 3 according to the invention, shows shear thinning behavior, as the viscosity at low shear rate is high and decreases as shear rates increase, whereas the use of an adhesive without rheology modification (in this case the MUF hardener from comparative example 1) does not show the effect of thixotropy. The shear thinning flow properties are constant and not time-dependent. Preferably, the viscosity of the resin composition is more than 5000 mPas at a low shear rate of at most 10 reciprocal second as measured by the Brookfield test and preferably more than 6000mPas, more preferably at least 7000, even more preferably at least 8000 and most preferably at least 10,000mPas at a shear rate of at most one reciprocal second. It will be appreciated that the adhesive composition has a viscosity of 5,000-20,000 mPas per second irrespective of how it is measured..

As is demonstrated, in the present invention adhesive rheology is modified by increasing the temperature, changing the viscosity to greater than 5000 mPas per second at a shear rate of less than 10 reciprocal seconds, and/or adding a thixotropic agent.

### Example 4. PRF mix-in in contactless application

The examples mentioned so far have been melamine based adhesives. The same approach can be used for a phenol resorcinol adhesives. The viscosity and sagging at 20°C are too high at room temperature and addition of a rheology modifier or reduce the temperature of the glue mixture are required to obtain a system well suited for contactless application, as seen in Table 4.

**Table 4. PRF for contactless application**

| | Viscosity @20°C | Viscosity @ 10°C | Sagging @ 20°C | Sagging @ 10°C |
|---|---|---|---|---|
| PRF Adhesive mix | 6400 | 8800 | OK | No |
| (Prefere 4044:5839 100:20 wt%) | | | | |
| PRF Adhesive mix with rheological additive | 6600 | 10500 | OK | No |
| (Prefere 4044 with fumed silica: Prefere 5839 100:20wt%) | | | | |

Thus, the invention has been described by reference to certain embodiments discussed more than. It will be recognized that these embodiments are susceptible to various modifications and alternative forms well known to those of skill in the art.

Further modifications in addition to those described may be made to the structures and techniques described herein. Accordingly, although specific embodiments have been described, these are examples only and are not limiting upon the scope of the invention.

## Claims

1. Method for applying an adhesive to a finger surface of a substrate, comprising;
- providing a contactless application device comprising at least 2 nozzles for ejecting adhesive onto the substrate without contacting the substrate,
- providing a modified adhesive comprising
- a condensation resin selected from the group of urea formaldehyde (UF) resin, melamine formaldehyde resin (MF), modified melamine formaldehyde resin (xMF) and phenol resorcinol formaldehyde resin (PRF) or combinations thereof,
- optionally a hardener,
wherein the rheology of the adhesive is modified by at least one of the following measures:
- cooling to a temperature between 5 and 15 °C, preferably 5 to 10 °C to achieve a viscosity of at least 5000 mPas and preferably less than 20,000 mPas,
- including into the adhesive a viscosity increasing substance to increase the viscosity to at least 3000 mPas and preferably less than 20,000 mPas,
- including a thixotropic increasing substance in an effective amount to prevent sagging of the adhesive on the surface.

2. The method according to claim 1, wherein the hardener is applied separately to a substrate and wherein also the rheology of the hardener is modified by at least one of the following measures
- cooling to a temperature between 5 and 15 °C, preferably 5 to 10°C,
- including into the adhesive a viscosity increasing substance,
- including a thixotropic increasing substance in an effective amount to prevent sagging of the adhesive on the surface.

3. The method according to claim 1, wherein the rheology modified adhesive and hardener are applied separately and unmixed on the same surface or each to another opposing substrate surface to be adhered.

4. The method according to any one of claims 1 to 3, wherein the condensation resin is urea formaldehyde resin comprising between 20% and 60% wt%, preferably 30 to 55 wt%, most preferably 35 to 50 wt% urea or wherein the condensation resin is a melamine formaldehyde resin comprising between 25% and 50%, preferably 30 to 45 wt%, most preferably 35 to 45 wt% melamine or wherein the condensation resin is liquid melamine modified melamine formaldehyde resin comprising between 3% and 50% wt%, preferably 5 to 40 wt%, most preferably 15 to 30 wt% melamine.

5. The method according to claim 1 to 4, wherein hardener and resin are mixed and the hardener to resin dosage is 5 to 50 wt% hardener to 100 wt% resin and preferably 10 to 30 wt% hardener to 100 wt% resin.

6. The method according to claim 1 to 5, wherein the hardener and the resin are applied separately and wherein the hardener to resin dosage is from 10 to 200 wt % hardener to 100 wt% resin, preferably 50 to 150 wt% hardener to 100 wt% resin.

7. The method according to any one of claims 1 to 3, wherein the condensation resin is PRF resin comprising between 5% and 50% wt%, preferably 10 to 45 wt%, most preferably 15 to 40 wt% resorcinol (calculated on total resin solids weight).

8. The method according to claim 7, wherein hardener and resin are mixed and the hardener to resin dosage is 10 to 50 wt% hardener to 100wt% resin and preferably 20 - 40 wt%, more preferably 10 to 30 wt% hardener to 100 wt% resin.

9. The method according to claims 1 to 8, wherein the viscosity and/or thixotropy increasing substance is selected from the group of carboxymethyl cellulose, hydroxyethyl cellulose, cellulose fibers, polyvinyl alcohol, polyurethane thickener, polyurea sag control agent (SCA), polyvinyl pyrrolidone thickener, swellable emulsions, xanthan gum, fumed silica and clay.

10. The method according to any one of claims 1 to 9, wherein the viscosity and/or thixotropy increasing substance is present from 0.1 to 10 wt %, preferably 0.1 to 5wt%, more preferably 0.1 to 2wt%, calculated based on the total weight of at least one of the liquid resin and the hardener.

11. The method according to any one of claims 1 to 10, wherein the substrate comprises at least one wood product, a laminated panel or a laminated beam.

12. The method according to claims 1, wherein the composition is applied to a substrate through cooled nozzles.

13. Contactless finger joint applicator comprising cooled nozzles for applying and cooling an adhesive to 5-15°C.

14. An apparatus for applying an adhesive composition in a contactless finger joint application method according to claim 1 comprising:
• a contactless finger joint applicator according to claim 13 comprising at least 2 nozzles for ejecting an adhesive onto a substrate and,
• a cooling means capable of cooling the nozzles for cooling the adhesive to a temperature of between 5 and 15 °C.

15. An apparatus according to claim 14 comprising an adhesive composition, wherein the adhesive rheology is modified by at least one of the following measures:
• cooling to a temperature between 5 and 15 °C to achieve a viscosity of at least 5,000 mPas and preferably less than 20,000 mPas,
• including into the adhesive a viscosity increasing substance to increase the viscosity to at least 3,000 mPas and preferably less than 20,000 mPas, and
• including a thixotropic increasing substance in an effective amount to prevent sagging of the adhesive on the surface.

## Patentansprüche

1. Verfahren zum Auftragen eines Klebstoffs auf eine Fingerfläche eines Substrats, umfassend:
- das Bereitstellen einer kontaktfreien Auftragsvorrichtung umfassend mindestens 2 Düsen zum Ausstoßen von Klebstoff auf das Substrat, ohne das Substrat zu kontaktieren,
- das Bereitstellen eines modifizierten Klebstoffs umfassend
- ein Kondensationsharz ausgewählt aus der Gruppe von Harnstoffformaldehyd-(HF-) Harz, Melaminformaldehydharz (MF), modifiziertem Melaminformaldehydharz (xMF) und Phenolresorcinformaldehydharz (PRF) oder Kombinationen davon,
- wahlweise ein Härtemittel,
wobei die Rheologie des Klebstoffs durch mindestens eine der folgenden Maßnahmen modifiziert wird:
- Kühlen auf eine Temperatur zwischen 5 und 15 °C, bevorzugt 5 bis 10 °C, um eine Viskosität von mindestens 5000 mPas und bevorzugt weniger als 20.000 mPas zu erreichen,
- Einarbeiten in den Klebstoff einer die Viskosität erhöhenden Substanz, um die Viskosität auf mindestens 3000 mPas und bevorzugt weniger als 20.000 mPas zu erhöhen,
- Einarbeiten einer die Thixotropie erhöhenden Substanz in einer wirksamen Menge, um das Durchhängen des Klebstoffs an der Oberfläche zu verhindern.

2. Verfahren nach Anspruch 1, wobei das Härtemittel einzeln auf ein Substrat aufgetragen wird und wobei auch die Rheologie des Härtemittels durch mindestens eine der folgenden Maßnahmen modifiziert wird
- Kühlen auf eine Temperatur zwischen 5 und 15 °C, bevorzugt 5 bis 10 °C,
- Einarbeiten einer die Viskosität erhöhenden Substanz in den Klebstoff,
- Einarbeiten einer die Thixotropie erhöhenden Substanz in einer wirksamen Menge, um das Durchhängen des Klebstoffs an der Oberfläche zu verhindern.

3. Verfahren nach Anspruch 1, wobei der die Rheologie modifizierende Klebstoff und das Härtemittel einzeln und ungemischt auf dieselbe Fläche oder jedes auf eine andere entgegengesetzte, zu befestigende Substratfläche aufgetragen wird.

4. Verfahren nach einem der Ansprüche 1 bis 3, wobei das Kondensationsharz Harnstoffformaldehydharz ist, das 20 bis 60 Gew.-%, bevorzugt 30 bis 55 Gew.-%, am bevorzugtesten 35 bis 50 Gew.-% Harnstoff umfasst oder wobei das Kondensationsharz ein Melaminformaldehydharz ist, das 25 bis 50 Gew.-% , bevorzugt 30 bis 45 Gew.-%, am bevorzugtesten 35 bis 45 Gew.-% Melamin umfasst oder wobei das Kondensationsharz mit flüssigem Melamin modifiziertes Melaminformaldehydharz ist umfassend 3 bis 50 Gew.-%, bevorzugt 5 bis 40 Gew.-%, am bevorzugtesten 15 bis 30 Gew.-% Melamin.

5. Verfahren nach Anspruch 1 bis 4, wobei das Härtemittel und Harz gemischt werden und die Dosierung von Härtemittel zu Harz 5 bis 50 Gew.-% Härtemittel zu 100 Gew.-% Harz und bevorzugt 10 bis 30 Gew.-% Härtemittel zu 100 Gew.-% Harz beträgt.

6. Verfahren nach Anspruch 1 bis 5, wobei das Härtemittel und das Harz einzeln aufgetragen werden und wobei die Dosierung von Härtemittel zu Harz 10 bis 200 Gew.-% Härtemittel zu 100 Gew.-% Harz, bevorzugt 50 bis 150 Gew.-% Härtemittel zu 100 Gew.-% Harz beträgt.

7. Verfahren nach einem der Ansprüche 1 bis 3, wobei das Kondensationsharz PRF-Harz ist, das 5 bis 50 Gew.-%, bevorzugt 10 bis 45 Gew.-%, am bevorzugtesten 15 bis 40 Gew.-% Resorcin (auf das Gesamtgewicht der Harzfeststoffe bezogen berechnet) umfasst.

8. Verfahren nach Anspruch 7, wobei das Härtemittel und Harz gemischt werden und die Dosierung von Härtemittel zu Harz 10 bis 50 Gew.-% Härtemittel zu 100 Gew.-% Harz und bevorzugt 20 - 40 Gew.-%, noch bevorzugter 10 bis 30 Gew.-% Härtemittel zu 100 Gew.-% Harz beträgt.

9. Verfahren nach den Ansprüchen 1 bis 8, wobei die die Viskosität und/oder die Thixotropie erhöhende Substanz aus der Gruppe ausgewählt ist von Carboxymethylcellulose, Hydroxyethylcellulose, Cellulosefasern, Polyvinylalkohol, Polyurethanverdickungsmittel, Polyharnstoff-Durchhängverhinderungsmittel (SCA), Polyvinylpyrrolidon-Verdickungsmittel, quellbaren Emulsionen, Xanthangummi, pyrogener Kieselsäure und Ton.

10. Verfahren nach einem der Ansprüche 1 bis 9, wobei die die Viskosität und/oder Thixotropie erhöhende Substanz in einer Menge von 0,1 bis 10 Ges.-%, bevorzugt 0,1 bis 5 Gew.-%, noch bevorzugter 0,1 bis 2 Ges.-%, auf das Gesamtgewicht von mindestens einem von dem flüssigen Harz und dem Härtemittel bezogen berechnet, vorliegt.

11. Verfahren nach einem der Ansprüche 1 bis 10, wobei das Substrat mindestens ein Holzprodukt, eine Schichtstoffplatte und einen Schichtstoffbalken umfasst.

12. Verfahren nach Anspruch 1, wobei die Zusammensetzung auf ein Substrat durch gekühlte Düsen aufgetragen wird.

13. Kontaktfreier Keilzinkenverbindungsapplikator umfassend gekühlte Düsen zum Kühlen eines Klebstoffs auf 5 - 15 °C.

14. Apparat zum Auftragen einer Klebstoffzusammensetzung durch ein kontaktfreies Keilzinkenverbindungs-Auftragsverfahren nach Anspruch 1, umfassend:
• einen kontaktfreien Verbindungsapplikator umfassend mindestens 2 Düsen zum Ausstoßen eines Klebstoffs auf ein Substrat und
• eine Kühlvorrichtung, die in der Lage ist, den Klebstoff auf eine Temperatur zwischen 5 und 15 °C zu kühlen.

15. Apparat nach Anspruch 14, umfassend eine Klebstoffzusammensetzung, wobei die Klebstoffrheologie durch mindestens eine der folgenden Maßnahmen modifiziert wird:
• Kühlen auf eine Temperatur zwischen 5 und 15 °C, um eine Viskosität von mindestens 5.000 mPas und bevorzugt weniger als 20.000 mPas zu erreichen,
• Einarbeiten in den Klebstoff einer die Viskosität erhöhenden Substanz, um die Viskosität auf mindestens 3.000 mPas und bevorzugt weniger als 20.000 mPas zu erhöhen,
• Einarbeiten einer die Thixotropie erhöhenden Substanz in einer wirksamen Menge, um das Durchhängen des Klebstoffs an der Oberfläche zu verhindern.

## Revendications

1. Procédé d'application d'un adhésif sur une surface à entures multiples d'un substrat, consistant à :
- fournir un dispositif d'application sans contact comprenant au moins 2 buses pour projeter l'adhésif sur le substrat sans contact avec le substrat,
- fournir un adhésif modifié comprenant
- une résine de condensation choisie dans le groupe constitué par une résine d'urée-formaldéhyde (UF), une résine de mélamine-formaldéhyde (MF), une résine de mélamine-formaldéhyde modifiée (xMF) et une résine de phénol-résorcinol-formaldéhyde (PRF) ou des combinaisons de celles-ci,
- facultativement un durcisseur,
dans lequel la rhéologie de l'adhésif est modifiée par au moins l'une des mesures suivantes :
- refroidir à une température comprise entre 5 et 15 °C, de préférence de 5 à 10 °C pour obtenir une viscosité d'au moins 5000 mPas et de préférence inférieure à 20 000 mPas,
- inclure dans l'adhésif une substance augmentant la viscosité pour augmenter la viscosité à au moins 3000 mPas et de préférence à moins de 20 000 mPas,
- inclure une substance augmentant la thixotropie en une quantité efficace pour éviter l'affaissement de l'adhésif sur la surface.

2. Procédé selon la revendication 1, dans lequel le durcisseur est appliqué séparément sur un substrat et dans lequel en outre la rhéologie du durcisseur est modifiée par au moins l'une des mesures suivantes
- refroidir à une température comprise entre 5 et 15 °C, de préférence de 5 à 10 °C,
- inclure dans l'adhésif une substance augmentant la viscosité,
- inclure une substance augmentant la thixotropie en une quantité efficace pour éviter l'affaissement de l'adhésif sur la surface.

3. Procédé selon la revendication 1, dans lequel l'adhésif ayant une rhéologie modifiée et le durcisseur sont appliqués séparément et non mélangés sur la même surface ou sur chacune des surfaces du substrat opposées l'une à l'autre sur lesquelles ils doivent adhérer.

4. Procédé selon l'une quelconque des revendications 1 à 3, dans lequel la résine de condensation est une résine d'urée-formaldéhyde comprenant entre 20 % et 60 % en poids, de préférence de 30 à 55 % en poids, de manière préférée entre toutes de 35 à 50 % en poids d'urée ou dans lequel la résine de condensation est une résine de mélamine-formaldéhyde comprenant entre 25 % et 50 %, de préférence de 30 à 45 % en poids, de manière préférée entre toutes de 35 à 45 % en poids de mélamine ou dans lequel la résine de condensation est une résine de mélamine-formaldéhyde modifiée de mélamine liquide comprenant entre 3 % et 50 % en poids, de préférence de 5 à 40 % en poids, de manière préférée entre toutes de 15 à 30 % en poids de mélamine.

5. Procédé selon la revendication 1 à 4, dans lequel le durcisseur et la résine sont mélangés et le dosage du durcisseur à la résine est de 5 à 50 % en poids de durcisseur pour 100 % en poids de résine et de préférence de 10 à 30 % en poids de durcisseur pour 100 % en poids de résine.

6. Procédé selon la revendication 1 à 5, dans lequel le durcisseur et la résine sont appliqués séparément et dans lequel le dosage du durcisseur à la résine est de 10 à 200 % en poids de durcisseur pour 100 % en poids de résine, de préférence de 50 à 150 % en poids de durcisseur pour 100 % en poids de résine.

7. Procédé selon l'une quelconque des revendications 1 à 3, dans lequel la résine de condensation est une résine PRF comprenant entre 5 % et 50 % en poids, de préférence de 10 à 45 % en poids, de manière préférée entre toutes de 15 à 40 % en poids de résorcinol (calculé par rapport au poids total en solides de la résine).

8. Procédé selon la revendication 7, dans lequel le durcisseur et la résine sont mélangés et le dosage du durcisseur à la résine est de 10 à 50 % en poids de durcisseur pour 100 % en poids de résine et de préférence de 20 à 40 % en poids, plus préférablement de 10 à 30 % en poids de durcisseur pour 100 % en poids de résine.

9. Procédé selon l'une quelconque des revendications 1 à 8, dans lequel la substance augmentant la viscosité et/ou la thixotropie est choisie dans le groupe constitué par la carboxyméthylcellulose, l'hydroxyéthylcellulose, les fibres de cellulose, un alcool polyvinylique, un épaississant à base de polyuréthane, un agent de contrôle d'affaissement (SCA) à base de polyurée, un épaississant à base de polyvinylpyrrolidone, les émulsions gonflables, la gomme xanthane, la silice fumée et l'argile.

10. Procédé selon l'une quelconque des revendications 1 à 9, dans lequel la substance augmentant la viscosité et/ou la thixotropie est présente de 0,1 à 10 % en poids, de préférence de 0,1 à 5 % en poids, plus préférablement de 0,1 à 2 % en poids, calculé en fonction du poids total de la résine liquide et/ou du durcisseur.

11. Procédé selon l'une quelconque des revendications 1 à 10, dans lequel le substrat comprend au moins un produit à base de poids, un panneau stratifié ou une poutre lamellée.

12. Procédé selon la revendication 1, dans lequel la composition est appliquée sur un substrat par le biais de buses refroidies.

13. Applicateur de joint à entures multiples sans contact comprenant des buses refroidies pour refroidir un adhésif à 5 à 15 °C.

14. Appareil pour l'application d'une composition adhésive dans un procédé d'application de joint à entures multiples sans contact selon la revendication 1 comprenant :
• un applicateur de joint sans contact comprenant au moins 2 buses pour projeter un adhésif sur un substrat, et
• un moyen de refroidissement capable de refroidir l'adhésif à une température comprise entre 5 et 15 °C.

15. Appareil selon la revendication 14 comprenant une composition adhésive, dans lequel la rhéologie de l'adhésif est modifiée par au moins l'une des mesures suivantes :
• refroidir à une température comprise entre 5 et 15 °C pour obtenir une viscosité d'au moins 5000 mPas et de préférence inférieure à 20 000 mPas,
• inclure dans l'adhésif une substance augmentant la viscosité pour augmenter la viscosité à au moins 3000 mPas et de préférence à moins de 20 000 mPas,
• inclure une substance augmentant la thixotropie en une quantité efficace pour éviter l'affaissement de l'adhésif sur la surface.
